# EUROPEAN PATENT APPLICATION

(11) **EP 1 275 882 A2**
(43) Date of publication of application: **15.01.2003**
(21) Application number: 02254770.7
(22) Date of filing: 08.07.2002
(51) Int. Cl.: F16H 25/22

(54) **Screw actuator**

(30) Priority: 07.07.2001 GB 0116674
(71) Applicant: Lucas Industries Limited, West Midlands B90 4LA (GB)
(72) Inventor: Harvey, John Herbert, Wolverhampton WV6 7SJ (GB)
(74) Representative: Pople, Joanne Selina

(57) **Abstract**

A screw actuator arrangement (10) comprises a rotatable input shaft (16) which is arranged to be driven, in use, by a drive arrangement (26). The input shaft (16) is coupled to a non-rotatably mounted output shaft (12), and has a screw thread formation (18) including a helical groove within which a plurality of spherical members (20) are received to provide a ball screw coupling between the input and output shafts (16, 12). The actuator (10) further comprises means for applying a braking load to the input shaft (16) so as to limit loading of the drive arrangement (26) in the event that an external overload is applied to the output shaft (12), in use.

## Description

The invention relates to a screw actuator comprising a first, rotatable member and a second, non rotatable member, the first and second members cooperating with one another such that rotation of the first member causes the second member to move axially relative to the first member. In particular, but not exclusively, the invention relates to a screw actuator for use in controlling a plurality of guide or stator vanes in a compressor for a gas turbine engine.

In a conventional ball screw actuator, a rotatable input shaft is arranged to impart relative axial movement to a non-rotatably mounted output shaft. The input shaft is provided with a screw thread including a helical groove within which balls, carried by the output shaft, are in rolling engagement to provide a ball screw coupling between the input and output shafts. The input shaft is conveniently coupled to a drive shaft through an appropriate gear arrangement. In electrical actuation systems, the drive shaft is rotatable under the influence of a magnetic field generated by means of a stator forming part of an electrical drive motor.

A potential problem with such systems is that, in the event that an external, axial overload is imparted to the output shaft, a torque may be applied to the input shaft, thereby causing a driving load in a forward or reverse direction to be transmitted back through the gear arrangement to the electrical drive motor. Such loading can cause movement of the output shaft away from the desired position and may cause damage to the gear arrangement and/or the motor.

It is an object of the present invention to provide a screw actuator in which this problem is avoided.

According to the present invention, there is provided a screw actuator comprising a rotatable input shaft which is arranged to be driven, in use, by a drive arrangement, the input shaft being coupled to a non-rotatably mounted output shaft, the input shaft having a screw thread formation including a helical groove within which a plurality of spherical members are received to provide a ball screw coupling between the input and output shafts, the actuator further comprising means for applying a braking load to the input shaft so as to limit loading of the drive arrangement in the event that an external overload is applied to the output shaft, in use.

The present invention provides a particular advantage when employed as a vane actuator for a compressor of a gas turbine engine. In the event of engine surge, a large force may be applied to the guide or stator vanes resulting in a large axial push or pull force being applied to the output shaft. The axial load applied to the output shaft can cause forward or reverse, angular loading of the input shaft, resulting in a load being transmitted back to the drive arrangement. Such loading, especially in the reverse direction, can result in damage being caused to the drive arrangement and/or any intermediate gear arrangement. The present invention serves to limit loading of the drive arrangement and/or the gear arrangement in the event that such external loading occurs.

In a preferred embodiment of the invention, the screw actuator may be driven by means of an electrical drive arrangement. The electrical drive arrangement may, but need not, form part of the screw actuator.

The input shaft may be provided with a region which is engageable with an abutment surface to apply a braking load to the input shaft in the event that an external overload is applied to the output shaft, thereby to limit loading of the drive arrangement.

The region of the output shaft may take the form of a flange. A drive shaft may be coupled to the flange to impart rotational movement to the input shaft.

The actuator may comprise first and second abutment surfaces, the flange being engageable with either the first or second abutment surface depending on the direction in which axial loading of the output shaft occurs.

The input shaft may carry first and second sleeve members, first and second respective biasing means being arranged to act on the first and second sleeve members respectively to maintain the input shaft in a balanced position in which the flange is spaced away from the first and second abutment surfaces.

The first and second abutment surfaces may be defined by first and second abutment members respectively which may, but need not, form part of an actuator housing.

The invention will now be described, by way of example only, with reference to the accompanying drawings in which;

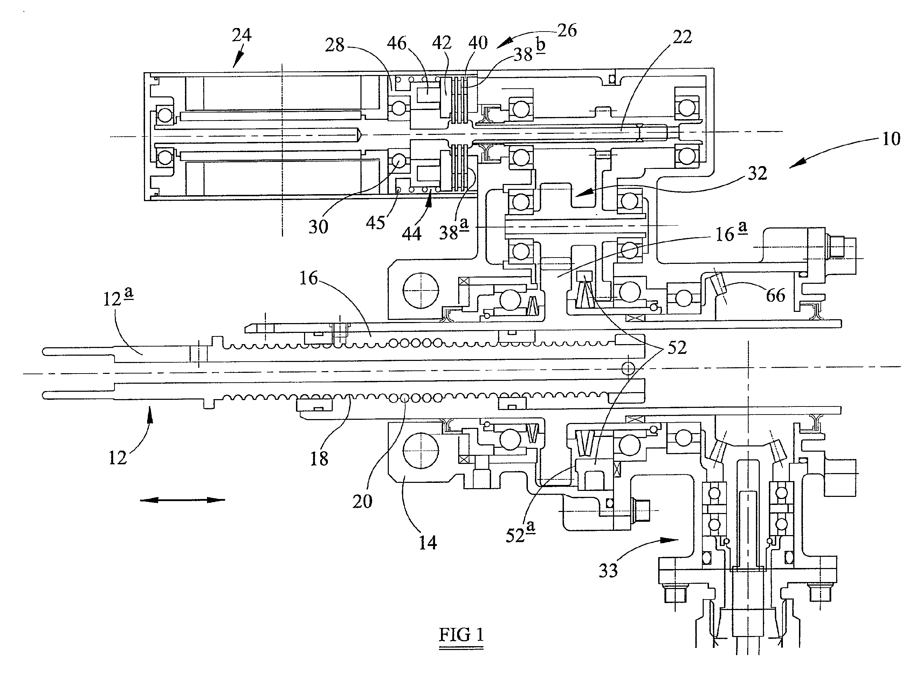

Figure 1 is a sectional view of a ball screw actuator in accordance with an embodiment of the present invention, and

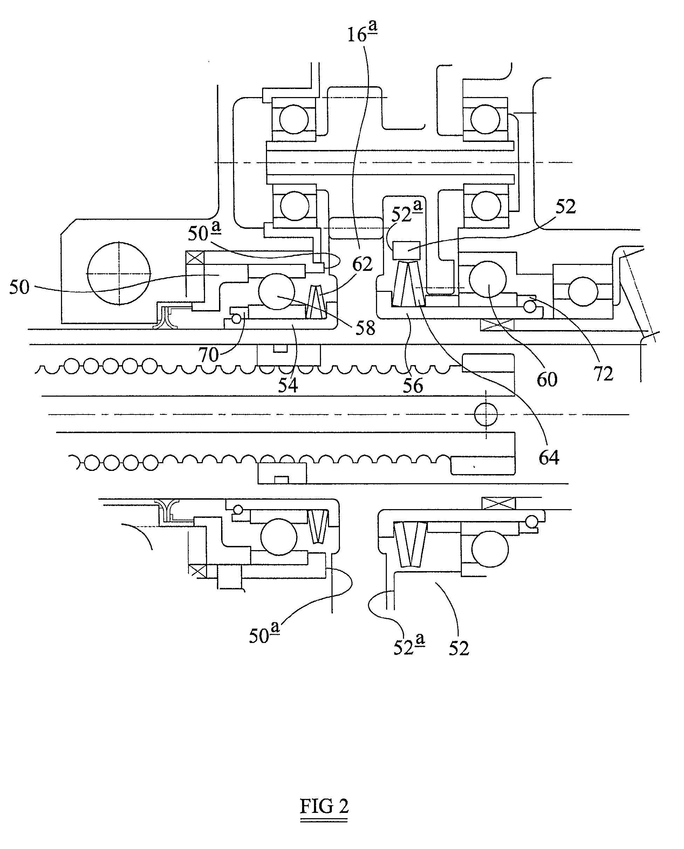

Figure 2 is an enlarged view of a part of the actuator in Figure 1.

A ball screw actuator, referred to generally as 10, includes an axially moveable, non-rotatably mounted output shaft 12, an output end 12a of which extends through an actuator housing 14 and is adapted to be coupled to an output element (not shown). The ball screw actuator is of the type suitable for use in driving a carrier ring for a plurality of stator or guide vanes in a compressor for a gas turbine engine, the output end 12a of the shaft 12 being adapted to be coupled to the carrier ring through a suitable linkage to impart angular movement to the carrier ring upon axial movement of the shaft 12. The output shaft is received, in part, within an input member 16 of substantially cylindrical form. The input member 16 is provided with a screw thread formation 18 including a helical groove, the output shaft 12 carrying a plurality of balls 20 in rolling engagement in the helical groove so as to form a ball screw coupling between the input member 16 and the output shaft 12. Upon rotary movement of the input member 16, axial movement is imparted to the output shaft 12 through the ball screw coupling.

The input member 16 is driven by means of a drive shaft 22 which is rotatable, in use, under the influence of a motor 24 forming part of an electrical drive arrangement, referred to generally as 26. A support member 28 is secured to or integrally formed with the actuator housing 14, the support member 28 carrying a bearing 30 which serves to guide the drive shaft 22 for rotary movement within the actuator housing 14. The drive shaft 22 is coupled to a flange 16a provided on the input member 16 through a first gear arrangement 32 such that, as the drive shaft 22 rotates under the influence of the motor 24, the input member 16 is caused to rotate to impart axial movement to the output shaft 12.

The electrical drive arrangement 26 may also be arranged to drive a second ball screw actuator (not shown) through a further gear arrangement 33 coupled to the input member 16, each of the ball screw actuators being coupled to a different part of the carrier ring. The use of two ball screw actuators to drive the carrier ring would be familiar to a person skilled in the art and will not be described in further detail hereinafter.

The drive shaft 22 is provided with a brake arrangement comprising a stack of first and second brake elements or discs 38a, 38b respectively in the form of brake discs. Alternate ones of the brake discs 38a (the first set of brake discs) are keyed to the drive shaft 22 such that they are rotatable with the drive shaft 22 and are free to move axially, relative to the drive shaft 22, by a predetermined, limited amount. The remaining brake discs (the second set of brake discs) 38b are keyed to a part 40 of the actuator housing 14 and are able to move axially relative to the housing part 40. An end surface of the housing part 40 acts as an abutment surface for the first set of brake discs 38a.

The electrical drive arrangement 26 also includes an electromagnetic actuator 44 comprising an energisable winding or coil 46 operable to control movement of an armature 42. A return spring 45 is arranged to apply a biasing force to the armature 42 which serves to urge the armature into engagement with an end one of the first brake discs 38a, thereby urging the first brake discs into engagement with the second brake discs 38b to apply a braking load to the drive shaft 22 so as to prevent rotation thereof. The electromagnetic actuator 44 is arranged such that energisation of the winding 46 causes the armature 42 to be attracted towards the winding 46, against the force due to the spring 45, thereby causing the compressive load applied to the first brake discs 38a to be removed. The first and second brake discs 38a, 38b are therefore disengaged and the braking load is removed from the drive shaft 22. When the winding 46 is de-energised, the armature 42 is urged into engagement with an end one of the first brake discs 38a under the force of the spring 45.

In the position shown in the accompanying drawing, the flange 16a provided on the input member 16 is spaced away from first and second abutment surfaces 50a, 52a of first and second abutment members 50, 52 respectively forming part of, or non-rotatably mounted upon, the actuator housing 14. First and second spring biased sleeves 54, 56 respectively are carried by the input member 16 and appropriate bearings 58, 60 are provided to guide the input member 16 and sleeves 54, 56 for rotary movement within the actuator housing 14. First and second springs 62, 64 are arranged to act on the first and second sleeves 54, 56 respectively, the spring forces being selected to ensure that, in normal use, the flange 16a provided on the input member 16 is maintained in a substantially central position in which it is spaced away from the first and second abutment surfaces 50a, 52a. The first and second sleeves 54, 56 are free to move axially with the input member 16 by a limited amount against the action of the first and second springs 62, 64 respectively. Movement of the first and second sleeves 54, 56 under the action of the first and second springs 62, 64 is limited by respective stops 70, 72.

When the actuator is in use and it is required to move the output shaft, the winding 46 of the electrical drive arrangement 26 is energised, thereby causing the armature 42 to be attracted towards the winding 46, against the force of the return spring 45, to remove the compressive load applied to the brake discs 38a, 38b. The drive shaft 22 is therefore free to rotate under the influence of the magnetic field generated by the motor 24. Rotary movement of the drive shaft 22 is transmitted through the gear arrangement 32 to the input member 16, thereby imparting axial movement to the output shaft 12 to vary the position of the output shaft 12 and any equipment connected thereto.

When the output shaft 12 has been moved into the required position, the winding 46 may be de-energised. The armature 42 is therefore urged towards the right in the illustration shown under the force of the return spring 45, thereby applying a compressive load to the first and second set of brake discs 38a, 38b to apply a braking load to the drive shaft 22. Braking of the drive shaft 22 prevents further axial movement of the output shaft 12, thereby serving to maintain the output shaft 12 and any equipment connected thereto in the selected position.

It will be appreciated that the brake arrangement takes the form of a power-off brake, such that any failure of power to the electrical drive arrangement 26 will cause a braking load to be applied to the drive shaft 22. Such a power-off brake is described in further detail in EP 1061281 A. In the event of such power failure, the output shaft 12 will therefore be held in a substantially fixed position as further rotary movement of the drive shaft 22 is prevented. Operation of the associated engine can therefore be maintained as there is no need to take the precaution of shutting down the engine to avoid undesirable movement of the guide vanes.

In the event that the output shaft 12 is pushed or pulled by an excessive, external axial load an undesirable angular load will be applied to the input member 16, thereby causing a load to be applied to the gear arrangement 32 and to the electrical drive arrangement 26. If an external axial load greater than the force of the second spring 64 is applied to the output shaft 12 urging the shaft 12 towards the right in the illustration shown, the axial load imparted to the input member 16 causes the flange 16a to be urged into engagement with the second abutment surface 52a against the force due to the second spring 64. Frictional engagement between the flange 16a and the second abutment member 52 serves to resist rotation of the input member 16 such that only a limited load will be transmitted to the gear arrangement 32 and the drive arrangement 26. Any residual load transmitted to the motor can be reacted by the motor brake such that the position of the actuator output shaft 12 is substantially maintained.

If an external axial load greater than the force of the first spring 62 is applied to the output shaft 12 urging the output shaft 12 to the left in the illustration shown, the axial load imparted to the input member 16 serves to urge the first sleeve 54 to the left, against the force due to the first spring 62, thereby causing the flange 16a to engage the first abutment surface 50a. As described previously, frictional engagement between the flange 16a and the first abutment surface 50a causes a braking load to be applied to the input member 16 which serves to prevent rotation and, hence, limits the load imparted to the gear arrangement 32 and the electrical drive arrangement. The provision of the first and second spring biased sleeves 54, 56 and the first and second abutment surfaces 50a, 52a therefore provides an overload protection arrangement which serves to prevent movement or possible damage of the gear arrangement 32 and the electrical drive arrangement 26 in the event that an undesirable axial overload is applied through the output shaft 12 to the input member 16.

Where the actuator 10 is being used to control the position of gas turbine engine guide or stator vanes, the axial load applied to the output shaft 12 through the vanes may arise due to surge within the engine compressor. Once the condition has passed, the axial load is removed from the output shaft 12 and the flange 16a will be urged towards its balanced position (as shown in the accompanying drawing) under the influence of either the first or second spring 62, 64 and limited by the respective stop 70, 72.

It will be appreciated that the first and second springs 62, 64 may be selected to provide different braking characteristics for oppositely directed external axial loading of the output shaft 12. It will further be appreciated that the forces provided by the first and second springs 62, 64 must be selected to ensure that, during normal operation, when rotary movement of the drive shaft 22 is transmitted to the input member 16 to cause axial movement of the output shaft 12, any slight loading against the springs 62, 64 is not sufficient to cause the flange 16a of the input member 16 to engage either the first or second abutment surface 50a, 52a.

Although not essential, the first and second abutment surfaces 50a, 52a respectively may be provided with a frictional coating to improve the braking load applied to the input member 16 in the event that the axial overload is imparted to the output shaft 12. For example, the surface coating may raise the coefficient of friction of the engaged surfaces to a value greater than 0.1, and possibly greater than 0.2. For example, the coating may be a tungsten carbide material sold by union carbide under the name UCARWL IN40.

If it is sufficient for loading of the drive arrangement 26 to be limited upon application of an external load to the output shaft in only one direction, it will be appreciated that the overload protection arrangement may include only a single abutment surface with which the flange 16a on the input member 16 is engageable. In this case, it is only necessary to provide a single spring biased sleeve. For most practical purposes, however, the use of a bi-directional overload protection arrangement will be preferred.

It will further be appreciated that although the abutment surfaces 50a, 52a are separate from the actuator housing 14 in the accompanying illustration, the abutment surfaces may be provided on the actuator housing 14 itself.

In an alternative embodiment, the gear arrangement 32 need not be coupled to the input member 16 through the flange 16a forming part of the overload protection arrangement, but may be coupled to a bevel gear 66 arranged remotely from the output end 12a of the shaft 12.

It will be appreciated that, although the screw actuator of the present invention is described in relation to controlling the guide or stator vanes in a gas turbine engine, the screw actuator may also be used in other applications. For example, the screw actuator may also be used to control movement of a flight control surface on an aircraft.

## Claims

1. A screw actuator arrangement (10) comprising a rotatable input shaft (16) which is arranged to be driven, in use, by a drive arrangement (26), the input shaft (16) being coupled to a non-rotatably mounted output shaft (12), the input shaft (16) having a screw thread formation (18) including a helical groove within which a plurality of spherical members (20) are received to provide a ball screw coupling between the input and output shafts (16, 12), the actuator (10) further comprising means for applying a braking load to the input shaft (16) so as to limit loading of the drive arrangement (26) in the event that an external overload is applied to the output shaft (12), in use.

2. The screw actuator as claimed in claim 1, including a drive arrangement (26).

3. The screw actuator arrangement according to a claim 1 or claim 2, wherein the input shaft (16) is provided with a region, which is engageable with an abutment surface so as to apply a braking load to the input shaft (16) in the event that an external overload is applied to the output shaft (12), thereby to limit loading of the drive arrangement (26).

4. The screw actuator arrangement according to claim 3, wherein said region of the output shaft (16) takes the form of a flange (16a).

5. The screw actuator arrangement according to claim 4, wherein the flange (16a) is engageable with either a first or second abutment surface (50a, 52a) depending on the direction in which axial loading of the output shaft (12) occurs.

6. The screw actuator arrangement according to claim 5, wherein the first and second abutment surfaces (50a, 52a) are defined by first and second abutment members (50, 52) respectively.

7. The screw actuator arrangement according to claim 6, wherein the first and second abutment members (50, 52) form part of an actuator housing (14).

8. The screw actuator arrangement according to any of claims 4 to 7, wherein a drive shaft (22) is coupled to the flange (16a) to impart rotational movement to the input shaft (16).

9. The screw actuator arrangement according to any of claims 4 to 8, wherein the input shaft (16) carries first and second sleeve members (54, 56).

10. The screw actuator arrangement according to claim 9, comprising first and second respective biasing means (62, 64) arranged to act on the first and second sleeve members (54, 56) respectively to maintain the input shaft (16) in a balanced position in which the flange (16a) is spaced away from the first and second abutment surfaces (50a, 52a).

11. The screw actuator arrangement according to any preceding claim, wherein said output shaft (12) is connectable to a vane actuator for a compressor of a gas turbine engine.

12. The screw actuator arrangement according to any of claims 5 to 7, wherein said first and second abutment surfaces (50a, 52a) are provided with a frictional coating.
